# EUROPÄISCHE PATENTSCHRIFT

(11) **EP 3 305 632 B1**
(45) Veröffentlichungstag und Bekanntmachung des Hinweises auf die Patenterteilung: **03.11.2021**
(21) Anmeldenummer: 17185559.6
(22) Anmeldetag: 09.08.2017
(51) Int. Cl.: B62D 55/02

(54) **LANDWIRTSCHAFTLICHES FAHRZEUG**
AGRICULTURAL VEHICLE
VÉHICULE AGRICOLE

(30) Priorität: 30.09.2016 DE 102016118619
(43) Veröffentlichungstag der Anmeldung: 11.04.2018
(73) Patentinhaber: CLAAS Selbstfahrende Erntemaschinen GmbH, 33428 Harsewinkel (DE)
(72) Erfinder: von Teschenhausen Uckelmann, Ulrich, 48231 Warendorf (DE)
(74) Vertreter: CLAAS Gruppe

(56) Entgegenhaltungen:
- EP-A1- 0 414 325
- WO-A1-79/00118
- DE-A1-102014 117 904
- RU-C2- 2 347 708
- US-A- 1 296 309

## Beschreibung

Die vorliegende Erfindung betrifft ein landwirtschaftliches Fahrzeug gemäß dem Anspruch 1.

Landwirtschaftliche Fahrzeuge, insbesondere Traktoren, sind hinsichtlich ihres Betriebs auf einem zu bearbeitenden Feld oder bei einer Fahrt auf er öffentlichen Straße unterschiedlichen Restriktionen unterworfen. So wird bei einer Fahrt auf einem zu bearbeitenden Feld eine möglichst geringe Bodenverdichtung angestrebt. Dies kann beispielsweise bei Fahrzeugen mit luftgefüllten Reifen durch eine Vergrößerung der Reifenaufstandsfläche erfolgen. Um dies zu ermöglichen, werden Reifendruckregelanlagen eingesetzt, welche beispielsweise bei einem Wechsel von einer öffentlichen Straße auf ein Feld den Reifendruck so weit absenken, bis die Reifenaufstandsfläche eine gewünschte Größe erreicht hat. Umgekehrt kann bei einem Wechsel von einem Feld auf eine Straße der Reifendruck wieder so weit erhöht werden, dass ein sicheres Fahren auf der Straße möglich ist. Bei einer Teilnahme an dem öffentlichen Straßenverkehr unterliegen die landwirtschaftlichen Fahrzeuge auch gesetzlichen Bestimmungen hinsichtlich des zulässigen Gesamtgewichtes. Landwirtschaftliche Fahrzeuge wie Traktoren werden oftmals mit daran angebrachten Anbaugeräten vom Feld auf die Straße gefahren, um beispielsweise ein anderes Feld oder eine Hofstätte zu erreichen. Hierbei kann es durch das zusätzliche Gewicht des Anbaugerätes zu einer Überschreitung des zulässigen Gesamtgewichtes kommen. Eine Einrichtung zur Verringerung der Bodenverdichtung in Form von mehreren Raupenlaufwerken ist beispielsweise aus der DE 10 2014 117 904 A1 bekannt. Aus der DE 102 40 236 A1 ist ein Mähdrescher mit einer Stützradanordnung bekannt, wobei der Mähdrescher einen Fahrzeugrahmen aufweist, an dem eine angetriebene Vorderachse und eine lenkbare Hinterachse angeordnet sind. Zwischen der angetriebenen Vorderachse und der lenkbaren Hinterachse des Mähdreschers ist eine Stützradanordnung angeordnet, welche mittels eines Stützrahmens an der der Hinterachse zugewandten Seite der Vorderachse angelenkt, wobei die Stützräder in den Spuren der Vorderräder geführt sind. Durch Hydraulikzylinder kann während der Feldfahrt eine im Wesentlichen in vertikaler Richtung wirkende Kraft auf die Stützradanordnung ausgeübt werden, um die Vorderachse zu entlasten. Dabei verändert sich die durch die Stützradanordnung erreichte Entlastung dynamisch in Abhängigkeit von dem Gesamtgewicht des Mähdreschers, welches im Verlauf des Erntevorganges bei der Feldfahrt zunimmt, da aufgenommenes Erntegut in einem auf dem Fahrzeugrahmen des Mähdreschers angeordneten Korntank gespeichert wird. Die Stützradanordnung ist für den Ernteeinsatz auf dem Feld vorgesehen, während bei einer Straßenfahrt des Mähdreschers die Stützradanordnung außer Eingriff gebracht wird, da deren Einsatz nicht notwendig ist. Durch das Entleeren des Korntanks auf dem Feld von Antritt einer Straßenfahrt ist das gesetzlich zulässige Gesamtgewicht eingehalten.

Es ist daher die Aufgabe der vorliegenden Erfindung ein landwirtschaftliches Fahrzeugbereitzustellen, welches eine Verringerung der Bodenverdichtung in einem Feld und eine Einhaltung gesetzlicher Bestimmungen bei einer Straßenfahrt ermöglicht. Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein landwirtschaftliches Fahrzeug, insbesondere Traktor, umfassend einen Fahrzeugrahmen, an dem eine Vorderachse und eine Hinterachse mit durch einen Antriebsmotor antreibbaren Bodeneingriffsmitteln zur Abstützung des Fahrzeuges gegenüber dem Boden angeordnet sind, sowie eine zwischen Vorderachse und Hinterachse befindliche Stützanordnung. Gemäß der Erfindung ist die Stützanordnung in Form eines Raupenlaufwerkes ausgebildet. Durch die Anordnung eines, beispielsweise freilaufenden, Raupenlaufwerkes zwischen den Achsen des landwirtschaftlichen Fahrzeuges kann bei einem Bodenkontakt des Raupenlaufwerkes die Aufstandsfläche des Fahrzeuges, sowohl im Feld als auch auf der Straße, erhöht werden. Dadurch kann die Aufstandslast pro Fläche verringert werden, was den Vorteil hat, dass im Feld eine Bodenverdichtung verringert und auf der Straße gesetzliche Vorschriften eingehalten werden können.

Nach der Erfindung ist das Raupenlaufwerk im Wesentlichen mittig des Fahrzeugrahmens, innerhalb von Fahrspuren der Bodeneingriffsmittel, angeordnet. Hierdurch kann die Bodenaufstandsfläche des Fahrzeuges vergrößert werden ohne eine Breite des Fahrzeuges zu vergrößern.

Besonders bevorzugt ist das Raupenlaufwerk mittels einer Hubvorrichtung zwischen einer Betriebsposition, in welcher das Raupenlaufwerk zumindest teilweise in Eingriff mit dem Boden steht, und einer Transportposition, in welcher das Raupenlaufwerk von dem Boden abgehoben ist, verlagerbar angeordnet. Ein verlagerbar ausgestaltetes Raupenlaufwerk ermöglicht einen Einsatz des Raupenlaufwerkes nur bei Bedarf, wodurch eine unnötige Belastung und ein erhöhter Verschleiß des Raupenlaufwerkes vermieden werden kann.

In einer bevorzugten Ausgestaltung der Erfindung ist die Hubvorrichtung in Form von mindestens einem Hydraulikzylinder ausgebildet. Das Raupenlaufwerk kann über den mindestens einen Hydraulikzylinder federnd und dämpfend wirken und die Fahreigenschaften im Feldbetrieb und/oder bei einer Straßenfahrt verbessern. Vorzugsweise ist mindestens eine, insbesondere starre und/oder längenveränderbare, Zugstange vorgesehen, durch welche das Raupenlaufwerk heckseitig mit dem Fahrzeugrahmen verbunden ist. Durch die Zugstange kann das Raupenlaufwerk bei einer Verlagerung geführt werden. Zudem können Zugkräfte des Raupenlaufwerkes unmittelbar auf den Fahrzeugrahmen übertragen werden, wodurch ein verbesserter Kraftfluss in dem Fahrzeugrahmen erreicht wird.

Vorteilhafterweise ist das Raupenlaufwerk, insbesondere hydrostatisch und/oder elektrisch, antreibbar ausgestaltet. Durch einen eigenen Antrieb des Raupenlaufwerkes, insbesondere durch einen Hydraulikmotor und/oder einen Elektromotor, kann eine höhere Antriebsleistung bereitgestellt werden.

Nach der Erfindung weist das Raupenlaufwerk ein zwischen einer vorderen und einer hinteren Umlenkrolle gespanntes Raupenband auf. Das Raupenband kann aus einem elastischen, gummiartigen Werkstoff und/oder auch aus einem metallischen Werkstoff ausgebildet sein. Durch die Ausgestaltung mit zwei Umlenkrollen, und insbesondere dazwischen bodenseitig angeordneten Stützrollen, kann ein kompaktes Raupenlaufwerk mit geringem Bauraumbedarf bereitgestellt werden.

Vorzugsweise weist das Raupenlaufwerk fahrzeugrahmenseitig einen Niederhalter auf, welcher auf eine Oberseite des Raupenbandes wirkt. Durch den Niederhalter, insbesondere mit Rollen oder Gleitflächen, kann das Raupenband auf einfache Weise gespannt werden. Zudem ermöglicht der Niederhalter, welcher auf das Raupenband wirkt und dieses eindrückt, den benötigten Bauraum des Raupenlaufwerkes weiter zu reduzieren.

Das landwirtschaftliche Fahrzeug ist vorzugsweise in unterschiedlichen Fahrmodi, insbesondere einem Feldfahrmodus und einem Straßenfahrmodus, betreibbar, wobei das Raupenlaufwerk in jedem Fahrmodus, insbesondere automatisch, zuschaltbar ist. In einem Fahrmodus können besondere Einstellungen an dem Fahrzeug vorgenommen werden, beispielsweise bei Bodeneingriffsmitteln in Form von luftgefüllten Reifen eine Regelung des jeweiligen Reifendrucken. Zudem kann in dem Feldfahrmodus das Ziel eine geringe Bodenverdichtung und in einem Straßenfahrmodus eine sichere Straßenlage des Fahrzeuges sein. Hierbei kann das Raupenlaufwerk je nach Bedarf zugeschaltet und eingesetzt werden, um sowohl eine Bodenverdichtung zu verringern als auch eine stabilere Straßenlage des Fahrzeuges zu unterstützen oder eine gesetzliche Vorschrift bezüglich des Fahrzeuggewichtes und beispielsweise einer Achslast einzuhalten.

In einer bevorzugten Ausgestaltung der Erfindung ist eine Steuervorrichtung zur Steuerung des Raupenlaufwerkes und/oder der Hubvorrichtung vorgesehen. Dies ermöglicht ein, insbesondere automatisches, Zuschalten und Regeln des Raupenlaufwerkes und/oder der Hubvorrichtung. Hierdurch kann beispielsweise bei das Raupenlaufwerk im Feld derart eingestellt werden, dass die vordere Umlenkrolle höher steht als die hintere Umlenkrolle, um ein Eingraben des Raupenlaufwerkes zu vermeiden. Zudem kann bei einer Straßenfahrt, beispielsweise in einer Kurve, die Hubvorrichtung derart angesteuert werden, dass kurvenaußenseitig Stützkräfte über das Raupenlaufwerk generiert werden, welche einer Wankbewegung des Fahrzeuges entgegenwirken können. Dies hat den Vorteil, dass die Fahrstabilität des landwirtschaftlichen Fahrzeuges besonders bei einer Straßenfahrt erhöht werden kann. Nachfolgend wird die Erfindung unter Bezugnahme auf die anliegenden Zeichnungen näher erläutert.

Es zeigen:
- Fig. 1:: eine schematische Seitenansicht eines landwirtschaftlichen Fahrzeuges mit einem Raupenlaufwerk in einer Transportposition; und
- Fig. 2:: eine schematische Seitenansicht des Fahrzeuges aus Figur 1 mit einem Raupenlaufwerk in einer Betriebsposition.

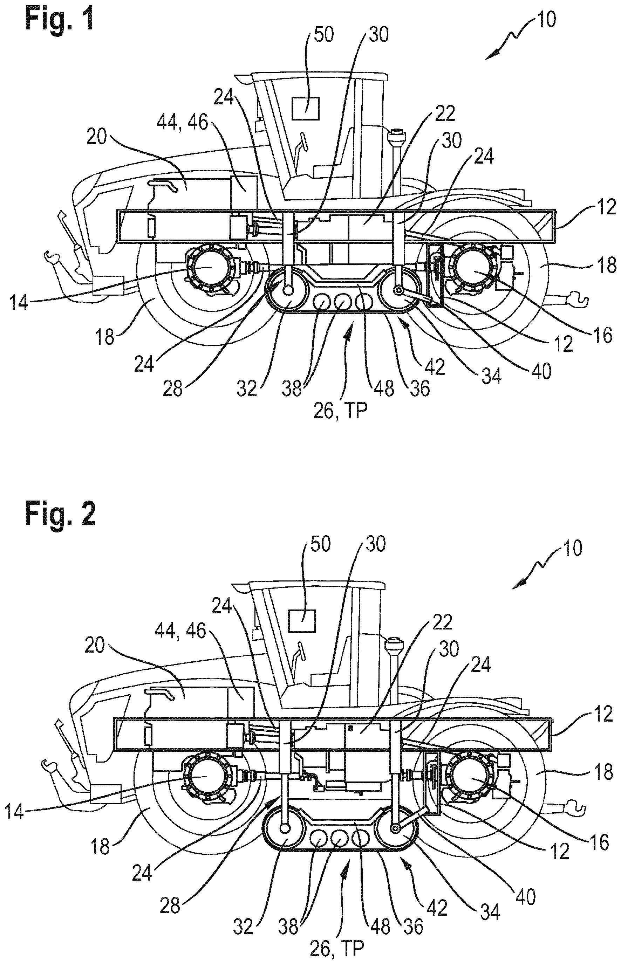

Die Darstellung in Fig. 1 zeigt eine schematische Seitenansicht eines landwirtschaftlichen Fahrzeuges 10. Das landwirtschaftliche Fahrzeug umfasst einen Fahrzeugrahmen 12, an dem eine Vorderachse 14 und eine Hinterachse 16 mit daran angeordneten Bodeneingriffsmitteln 18 in Form von, insbesondere luftgefüllten, Reifen angeordnet sind. Alternativ können Bodeneingriffsmittel 18 auch in Form von Raupenlaufwerken ausgebildet sein. An dem Fahrzeugrahmen 12 ist ein Antriebsmotor 20 angeordnet, durch welchen die Vorderachse 14, die Hinterachse 16 und die Bodeneingriffsmittel 18 über ein Getriebe 22 und Gelenkwellen 24 antreibbar sind.

Gemäß der Erfindung weist das landwirtschaftliche Fahrzeug 10 eine zwischen der Vorderachse 14 und der Hinterachse 16 befindliche Stützanordnung in Form eines Raupenlaufwerkes 26 auf. Das Raupenlaufwerk 26 ist dabei zwischen der Vorderachse 14 und der Hinterachse 16 derart angeordnet, dass es seitlich innerhalb der Fahrspuren der Bodeneingriffsmittel 18 angeordnet ist, welche an der Vorderachse 14 und der Hinterachse 16 angeordnet sind. Das Raupenlaufwerk 26 ist in einer Transportposition TP dargestellt, in der das Raupenlaufwerk 26 an dem Fahrzeugrahmen 12 angeordnet und nicht in Bodeneingriff ist. Über eine Hubvorrichtung 28 ist das Raupenlaufwerk 26 an dem Fahrzeugrahmen 12 verlagerbar angeordnet. Die Hubvorrichtung 28 weist vier Hydraulikzylinder 30 auf, welche jeweils paarweise an einem vorderen und einem hinteren Ende des Raupenlaufwerkes 26 und dem Fahrzeugrahmen 12 angeordnet sind. Die Hubzylinder 30 können an einem außenseitigen Rahmen (nicht dargestellt) des Raupenlaufwerkes 26 oder unmittelbar an dem Raupenlaufwerk 26, beispielsweise den Achsen einer vorderen Umlenkrolle 32 und/oder einer hinteren Umlenkrolle 34, angeordnet sein.

Das Raupenlaufwerk 26 weist ein Raupenband 36 auf, welches um die beiden Umlenkrollen 32, 34 geführt und durch diese spannbar ist. Zwischen den Umlenkrollen 32, 34 sind bodenseitig Stützrollen 38 angeordnet. Heckseitig ist das Raupenlaufwerk 26 über mindestens eine Zugstange 40 mit dem Fahrzeugrahmen 12 verbunden, um Zugkräfte des Raupenlaufwerkes 26 auf den Fahrzeugrahmen 12 übertragen zu können. Es können auch zwei Zugstangen 40 vorgesehen sein, welche an jeder Seite des Raupenlaufwerkes 26 angeordnet sein können.

Das in eine Betriebsposition BP (Fig. 2) abgesenkte Raupenlaufwerk 26 kann freilaufend oder angetrieben betrieben werden. Zum Antrieb weist das Raupenlaufwerk 26 in mindestens einer, insbesondere der hinteren, Umlenkrolle 32, 34 einen Antrieb 42 in Form eines Hydraulikmotors und/oder eines Elektromotors auf. Dies können mittels einer Hydraulikpumpe 44 und/oder eines Generators 46 durch den Antriebsmotor 20 mit Energie versorgt werden. Die Hydraulikpumpe 44 und/oder der Generator 46 können dabei an einem Nebenabtrieb des Antriebsmotors 20 angeordnet sein.

Das Raupenlaufwerk 26 weist weiterhin einen Niederhalter 48 auf, welcher an einer Oberseite, fahrzeugrahmenseitig, auf das Raupenband 36 wirkt, und dieses zwischen den Umlenkrollen 32, 34 in Richtung Boden verlagert, wodurch das Raupenband 36 spannbar ist. Der Niederhalter 48 kann verstellbar ausgestaltet sein, wodurch eine Spannung des Raupenbandes 36 einstellbar ist. Zur Steuerung des Raupenlaufwerkes 26 und/oder der Hubvorrichtung 28 ist eine Steuervorrichtung 50 vorgesehen. Diese ermöglicht eine individuelle Einstellung des Raupenlaufwerkes 26 und/oder der Hubvorrichtung 28, insbesondere jedes einzelnen Hydraulikzylinders 30. Hierdurch können beispielsweise einen vordere und hintere Achslast separat über die Hydraulikzylinder 30 der Hubvorrichtung 28 eingestellt werden. Ein Bremsen kann beispielsweise über den Antrieb 42 des Raupenlaufwerkes 26 erreicht werden. Weiterhin kann beispielsweise das Raupenlaufwerk 26 gleichmäßig oder aber hinten stärker als vorne belastet werden, um ein Einsinken der vorderen Umlenkrolle 32 in den Boden zu vermeiden. Zudem kann bei einer Straßenfahrt, insbesondere in Kuren, eine kurvenäußere Seite des Raupenlaufwerkes 26 stärker belastet werden, um einer Wankbewegung des Fahrzeuges 10 entgegenzuwirken.

### Bezugszeichenliste

- 10: Landwirtschaftliches Fahrzeug
- 12: Fahrzeugrahmen
- 14: Vorderachse
- 16: Hinterachse
- 18: Bodeneingriffsmittel
- 20: Antriebsmotor
- 22: Getriebe
- 24: Gelenkwelle
- 26: Raupenlaufwerk
- 28: Hubvorrichtung
- 30: Hydraulikzylinder
- 32: Vordere Umlenkrolle
- 34: Hintere Umlenkrolle
- 36: Raupenband
- 38: Stützrolle
- 40: Zugstange
- 42: Antrieb
- 44: Hydraulikpumpe
- 46: Generator
- 48: Niederhalter
- 50: Steuervorrichtung

- BP: Betriebsposition
- TP: Transportposition

## Patentansprüche

1. Landwirtschaftliches Fahrzeug, insbesondere Traktor, mit einem Fahrzeugrahmen (12), an dem eine Vorderachse (14) und eine Hinterachse (16) mit durch einen Antriebsmotor (20) antreibbaren Bodeneingriffsmitteln (18) zur Abstützung des Fahrzeuges (10) gegenüber dem Boden angeordnet sind, sowie eine zwischen Vorderachse (14) und Hinterachse (16) befindliche Stützanordnung, **dadurch gekennzeichnet, dass** die Stützanordnung in Form eines Raupenlaufwerkes (26) ausgebildet ist, wobei das Raupenlaufwerk (26) im Wesentlichen mittig des Fahrzeugrahmens (12), innerhalb von Fahrspuren der Bodeneingriffsmittel (18), angeordnet ist und das das Raupenlaufwerk (26) ein zwischen einer vorderen und einer hinteren Umlenkrolle (32, 34) gespanntes Raupenband (36) aufweist.

2. Landwirtschaftliches Fahrzeug nach Anspruch 1, **dadurch gekennzeichnet, dass** das Raupenlaufwerk (26) mittels einer Hubvorrichtung (28) zwischen einer Betriebsposition (BP), in welcher das Raupenlaufwerk (26) zumindest teilweise in Eingriff mit dem Boden steht, und einer Transportposition (TP), in welcher das Raupenlaufwerk (26) von dem Boden abgehoben ist, verlagerbar angeordnet ist.

3. Landwirtschaftliches Fahrzeug nach Anspruch 1 oder 2, **dadurch gekennzeichnet, dass** die Hubvorrichtung (28) in Form von mindestens einem Hydraulikzylinder (30) ausgebildet ist.

4. Landwirtschaftliches Fahrzeug nach einem der vorherigen Ansprüche, **dadurch gekennzeichnet, dass** mindestens eine, insbesondere starre und/oder längenveränderbare, Zugstange (40) vorgesehen ist, durch welche das Raupenlaufwerk (26) heckseitig mit dem Fahrzeugrahmen (12) verbunden ist.

5. Landwirtschaftliches Fahrzeug nach einem der vorherigen Ansprüche, **dadurch gekennzeichnet, dass** das Raupenlaufwerk (26), insbesondere hydrostatisch und/oder elektrisch, antreibbar ausgestaltet ist.

6. Landwirtschaftliches Fahrzeug nach einem der vorherigen Ansprüche, **dadurch gekennzeichnet, dass** das Raupenlaufwerk (26) fahrzeugrahmenseitig einen Niederhalter (48) aufweist, welcher auf eine Oberseite des Raupenbandes (36) wirkt.

7. Landwirtschaftliches Fahrzeug nach einem der vorherigen Ansprüche, **dadurch gekennzeichnet, dass** das Fahrzeug (10) in unterschiedlichen Fahrmodi, insbesondere einem Feldfahrmodus und einem Straßenfahrmodus, betreibbar ist, wobei das Raupenlaufwerk (26) in jedem Fahrmodus, insbesondere automatisch, zuschaltbar ist.

8. Landwirtschaftliches Fahrzeug nach einem der vorherigen Ansprüche, **dadurch gekennzeichnet, dass** eine Steuervorrichtung (50) zur Steuerung des Raupenlaufwerkes (26) und/oder der Hubvorrichtung (28) vorgesehen ist.

## Claims

1. An agricultural vehicle, in particular a tractor, with a vehicle frame (12) on which a front axle (14) and a rear axle (16) with ground engaging means (18) which can be driven by a propulsion engine (20), for bracing the vehicle (10) against the ground, as well as a support assembly located between the front axle (14) and the rear axle (16), **characterized in that** the support assembly is configured in the form of a track roller unit (26), wherein the track roller unit (26) is disposed substantially centrally of the vehicle frame (12) within tracks of the ground engaging means (18), and **in that** the track roller unit (26) has a crawler track (36) which is tensioned between a front and a rear guide roller (32, 34).

2. The agricultural vehicle according to claim 1, **characterized in that** the track roller unit (26) is displaceably disposed by means of a lifting device (28) between an operating position (BP), in which the track roller unit (26) is at least partially engaged with the ground, and a transport position (TP), in which the track roller unit (26) is raised from the ground.

3. The agricultural vehicle according to claim 1 or claim 2, **characterized in that** the lifting device (28) is configured in the form of at least one hydraulic cylinder (30).

4. The agricultural vehicle according to one of the preceding claims, **characterized in that** at least one connecting rod (40) is provided, which in particular is rigid and/or has an adjustable length, by means of which the track roller unit (26) is connected to the rear of the vehicle frame (12).

5. The agricultural vehicle according to one of the preceding claims, **characterized in that** the track roller unit (26) is configured so as to be drivable, in particular hydrostatically and/or electrically drivable.

6. The agricultural vehicle according to one of the preceding claims, **characterized in that** on the vehicle frame side, the track roller unit (26) has a hold-down device (48) which acts on the upper side of the crawler track (36).

7. The agricultural vehicle according to one of the preceding claims, **characterized in that** the vehicle (10) can be operated in different drive modes, in particular in a field drive mode and a road drive mode, wherein the track roller unit (26) can be connected up in each drive mode, in particular automatically.

8. The agricultural vehicle according to one of the preceding claims, **characterized in that** a control device (50) is provided for controlling the track roller unit (26) and/or the lifting device (28).

## Revendications

1. Véhicule agricole, en particulier tracteur, comprenant un bâti de véhicule (12) sur lequel un essieu avant (14) et un essieu arrière (16) sont disposés avec des moyens de prise au sol (18) entraînables par l'intermédiaire d'un moteur d'entraînement (20) pour donner un appui au véhicule (10) par rapport au sol, ainsi qu'un agencement d'appui se trouvant entre l'essieu avant (14) et l'essieu arrière (16), **caractérisé en ce que** l'agencement d'appui est conçu sous la forme d'un train de roulement à chenilles (26), le train de roulement à chenilles (26) étant disposé sensiblement au milieu du bâti de véhicule (12), à l'intérieur de traces de roulement des moyens de prise au sol (18), et **en ce que** le train de roulement à chenilles (26) comporte une bande de chenille (36) tendue entre un galet de renvoi avant et un galet de renvoi arrière (32, 34).

2. Véhicule agricole selon la revendication 1, **caractérisé en ce que** le train de roulement à chenilles (26) est disposé de façon transférable au moyen d'un dispositif de levage (28) entre une position de fonctionnement (BP), dans laquelle le train de roulement à chenilles (26) est au moins en partie en prise avec le sol, et une position de transport (TP), dans laquelle le train de roulement à chenilles (26) est décollé du sol.

3. Véhicule agricole selon la revendication 1 ou 2, **caractérisé en ce que** le dispositif de levage (28) est conçu sous la forme d'au moins un vérin hydraulique (30).

4. Véhicule agricole selon une des revendications précédentes, **caractérisé en ce qu'**il est prévu au moins une barre de traction (40), en particulier rigide et/ou variable en longueur, par l'intermédiaire de laquelle le train de roulement à chenilles (26) est relié, côté arrière, au bâti de véhicule (12).

5. Véhicule agricole selon une des revendications précédentes, **caractérisé en ce que** le train de roulement à chenilles (26) est conçu de façon entraînable, en particulier hydrauliquement et/ou électriquement.

6. Véhicule agricole selon une des revendications précédentes, **caractérisé en ce que** le train de roulement à chenilles (26) comporte, côté bâti de véhicule, un abaisseur (48) qui agit sur le dessus de la bande de chenille (36).

7. Véhicule agricole selon une des revendications précédentes, **caractérisé en ce que** le véhicule (10) peut être exploité dans différents modes de marche, en particulier dans un mode de marche en champ et dans un mode de marche sur route, le train de roulement à chenilles (26) pouvant être amené, en particulier automatiquement, dans chaque mode de marche.

8. Véhicule agricole selon une des revendications précédentes, **caractérisé en ce qu'**il est prévu un dispositif de commande (50) pour commander le train de roulement à chenilles (26) et/ou le dispositif de levage (28).
